# EUROPÄISCHE PATENTSCHRIFT

(11) **EP 3 947 993 B1**
(45) Veröffentlichungstag und Bekanntmachung des Hinweises auf die Patenterteilung: **02.08.2023**
(21) Anmeldenummer: 20718520.8
(22) Anmeldetag: 04.03.2020
(51) Int. Cl.: F16C 23/04, F16C 17/02, F16C 43/02, F16C 33/26, F03D 80/70

(54) **GONDEL MIT GLEITLAGERUNG**
NACELLE WITH PLAIN BEARING
NACELLE AVEC PALIER LISSE

(30) Priorität: 07.03.2019 AT 501832019
(43) Veröffentlichungstag der Anmeldung: 09.02.2022
(73) Patentinhaber: Miba Gleitlager Austria GmbH, 4663 Laakirchen (AT)
(72) Erfinder: HOLZINGER, Martin, 4644 Scharnstein (AT); WALDL, Albert, 4663 Laakirchen (AT); HÖLZL, Johannes, 4880 Berg im Attergau (AT); BERGMANN, Philipp, 4810 Gmunden (AT)
(74) Vertreter: Burger, Hannes
(86) Internationale Anmeldenummer: PCT/AT2020/060064
(87) Internationale Veröffentlichungsnummer: WO 2020/176919

(56) Entgegenhaltungen:
- EP-A1- 2 816 226
- EP-A1- 3 219 984
- EP-A1- 3 276 192
- WO-A1-2011/127510
- DE-C- 650 737
- DE-C- 678 930
- DE-C- 826 807
- FR-A- 1 464 065

## Beschreibung

Die Erfindung betrifft eine Gleitlagerung, sowie eine mit der Gleitlagerung ausgestattete Gondel für eine Windkraftanlage, eine Windkraftanlage, sowie ein Verfahren zum Wechsel von Gleitlagerpads in der Gleitlagerung.

Aus der WO 2011/127510 A1 ist ein Lagerelement für die Lagerung der Rotornabe einer Windkraftanlage bekannt.

Ein weiteres Lagerelement zur Lagerung einer Rotornabe einer Windkraftanlage ist aus der EP 3 219 984 A1 bekannt, dass die Merkmale des Oberbegriffs des Anspruchs 1 offenbart. Aufgabe der vorliegenden Erfindung war es, eine verbesserte Gleitlagerung zur Verfügung zu stellen.

Diese Aufgabe wird durch eine Vorrichtung und ein Verfahren gemäß den Ansprüchen gelöst. Erfindungsgemäß ist eine Gleitlagerung vorgesehen. Die Gleitlagerung umfasst:
- ein inneres Ringelement;
- ein äußeres Ringelement;
- zumindest ein Gleitlagerelement, welches zwischen dem inneren Ringelement und dem äu-ßeren Ringelement angeordnet ist.

Das Gleitlagerelement weist mehrere Gleitlagerpads auf, wobei die einzelnen Gleitlagerpads jeweils eine Lagerfläche aufweisen, welche in Form einer Kugelkalotte ausgebildet ist.

Die erfindungsgemäße Gleitlagerung weist den Vorteil auf, dass die einzelnen Gleitlagerpads einfach mit dem inneren Ringelement verbunden werden können und somit eine einfache Montage bzw. ein einfacher Austausch der einzelnen Gleitlagerpads erreicht werden kann. Darüber hinaus weist die erfindungsgemäße Gleitlagerung weist den überraschenden Vorteil auf, dass durch die erfindungsgemäße Ausführung einer Kugelkalotte Durchbiegungen der Rotorwelle in der Gleitlagerung ausgeglichen werden können, ohne dass es dabei zu einer erhöhten Flächenbelastung an der Lagerfläche kommt.

Weiters kann es zweckmäßig sein, wenn die einzelnen Gleitlagerpads jeweils ein der Lagerfläche gegenüberliegendes Befestigungsprofil aufweisen, und dass das innere Ringelement an dessen radialer Außenseite zumindest ein Aufnahmeprofil aufweist, welches zur formschlüssigen Verbindung der Gleitlagerpads mit dem inneren Ringelement dient. Durch diese Maßnahme kann eine einfache Austauschbarkeit des Gleitlagerpads erreicht werden und gleichzeitig im betriebsbereiten Zustand der Gleitlagerung ein fester Sitz der Gleitlagerpads erreicht werden.

Ferner kann vorgesehen sein, dass eine Befestigungsvorrichtung ausgebildet ist, welche zwischen dem Gleitlagerpad und dem inneren Ringelement angeordnet ist, wobei die Befestigungsvorrichtung mit dem Befestigungsprofil und dem Aufnahmeprofil gekoppelt ist.

Mittels der Befestigungsvorrichtung können die einzelnen Gleitlagerpads am inneren Ringelement befestigt werden. Zusätzlich dient die Befestigungsvorrichtung dazu, dass die einzelnen Gleitlagerpads einfach in die Gleitlagerung eingebaut werden können bzw. aus der Gleitlagerung wieder entfernt werden können. Insbesondere kann mittels der Befestigungsvorrichtung erreicht werden, dass beim Aus- bzw. Einbau der Gleitlagerpads diese axial zwischen das innere Ringelement und das äußere Ringelement eingeschoben werden können. Hierbei braucht das äußere Ringelement nicht geteilt ausgeführt zu sein.

Darüber hinaus kann vorgesehen sein, dass die Befestigungsvorrichtung ein erstes Profilelement aufweist, welches mit dem Befestigungsprofil gekoppelt ist und an der gegenüberliegenden Seite ein zweites Profilelement aufweist, welches mit dem Aufnahmeprofil gekoppelt ist. Durch diese Maßnahme kann die Befestigungsvorrichtung sowohl mit dem Gleitlagerpad als auch mit dem inneren Ringelement gekoppelt werden, wodurch mittels der Befestigungsvorrichtung das Gleitlagerpad am inneren Ringelement befestigt werden kann.

Vorteilhaft ist auch eine Ausprägung, gemäß welcher vorgesehen sein kann, dass das Befestigungsprofil und das erste Profilelement als Schwalbenschwanzverbindung ausgebildet ist und/oder dass das Aufnahmeprofil und das zweite Profilelement als Schwalbenschwanzverbindung ausgebildet ist. Besonders eine Schwalbenschwanzverbindung eignet sich gut zum Herstellen einer formschlüssigen Verbindung zwischen dem inneren Ringelement und der Befestigungsvorrichtung bzw. zwischen dem Gleitlagerpad und der Befestigungsvorrichtung.

Gemäß einer Weiterbildung ist es möglich, dass die Befestigungsvorrichtung einen Hauptkörper und zumindest einen ersten Klemmkeil umfasst, welcher eine Keilfläche aufweist, die mit einer im Hauptkörper ausgebildeten und sich in Axialrichtung verjüngenden ersten Gegenkeilfläche zusammenwirkt, wobei der erste Klemmkeil mittels einem ersten Positioniermittel, insbesondere einem Gewindeelement, in Axialrichtung relativ zum Hauptkörper verschiebbar ist. Besonders ein derart ausgebildeter Klemmkeil eignet sich überraschend gut zum Herstellen einer Verbindung, welche hohe Kräfte übertragen kann und welche einfach wieder gelöst werden kann.

Ferner kann es zweckmäßig sein, wenn die Befestigungsvorrichtung einen zweiten Klemmkeil umfasst, welcher eine Keilfläche aufweist, die mit einer im Hauptkörper ausgebildeten und sich in Axialrichtung verjüngenden zweiten Gegenkeilfläche zusammenwirkt, wobei die erste Gegenkeilfläche und die zweite Gegenkeilfläche entgegengesetzt verjüngend ausgebildet sind, wobei der zweite Klemmkeil mittels einem zweiten Positioniermittel, insbesondere einem Gewindeelement, in Axialrichtung verschiebbar ist. Durch den Einsatz eines zweiten Klemmkeils kann eine symmetrische Klemmung des Gleitlagerpads erreicht werden.

Darüber hinaus kann vorgesehen sein, dass das erste Positioniermittel und das zweite Positioniermittel an einer gemeinsamen Positionierstange ausgebildet sind, wobei das erste Positioniermittel ein Rechtsgewinde und das zweite Positioniermittel ein Linksgewinde aufweist. Dies bringt den Vorteil mit sich, dass durch Verdrehen der gemeinsamen Positionierstange beide Klemmkeile geöffnet bzw. geschlossen werden können. Für diese Funktion ist nur wesentlich, dass am ersten Positioniermittel und am zweiten Positioniermittel ein gegensinniges Gewinde ausgebildet ist. Für den alltäglichen Gebrauch macht es in der beschriebenen Konfiguration jedoch Sinn, dass das erste Positioniermittel ein Rechtsgewinde ist, sodass durch Drehen im Uhrzeigersinn die Klemmung geschlossen werden kann und durch Drehen gegen den Uhrzeigersinn die Klemmung geöffnet werden kann.

Weiters kann vorgesehen sein, dass der erste Klemmkeil und/oder der zweite Klemmkeil derart ausgebildet ist, dass er sich in das Befestigungsprofil und in das Aufnahmeprofil erstreckt. Dies bringt den Vorteil mit sich, dass durch Verschiebung des ersten Klemmkeils bzw. des zweiten Klemmkeils die Befestigungsvorrichtung sowohl im Befestigungsprofil als auch im Aufnahmeprofil geklemmt werden kann. Somit kann mit nur einer Betätigungsbewegung das Gleitlagerpad fest am inneren Ringelement geklemmt werden.

Gemäß einer besonderen Ausprägung ist es möglich, dass am inneren Ringelement im Bereich des Aufnahmeprofils ein Axialanschlag für das Gleitlagerpad ausgebildet ist. Dies bringt den Vorteil mit sich, dass das Gleitlagerpad in Axialrichtung exakt positioniert werden kann.

Entsprechend einer vorteilhaften Weiterbildung kann vorgesehen sein, dass ein Befestigungselement vorgesehen ist, mittels welchem das Gleitlagerpad in Axialrichtung an den Axialanschlag angedrückt ist. Dies bringt den Vorteil mit sich, dass das Gleitlagerpad in Axialrichtung fixiert bzw. richtig positioniert werden kann, um die Funktionalität des Gleitlagers erreichen zu können.

Eine Kugelkalotte ist ein Segment der Oberfläche einer Kugel. Die Lagerfläche weist vorzugsweise die Grundform einer idealen Kugelkalotte auf. Damit korrespondierend ist natürlich auch die Gegenfläche in Form einer idealen Kugelkalotte ausgebildet. Die Radien dieser beiden Kugelkalotten sind entsprechend gewählt, sodass die Lagerfläche möglichst vollflächig an der Gegenfläche aufliegt. In besonderen Anwendungsfällen kann auch vorgesehen sein, dass nicht die komplette Lagerfläche die Form einer idealen Kugelkalotte aufweist, sondem dass beispielsweise ein Öleinzugskeil ausgebildet ist, welcher bei einer hydrodynamischen Lagerung notwendig sein kann. Somit ist es möglich, dass die Lagerfläche insbesondere in Umfangsrichtung gesehen von der Form der idealen Kugelkalotte abweicht. Weiters ist es auch denkbar, dass die Oberfläche der Lagerfläche aufgrund von Fertigungstoleranzen von der idealen Kugelkalotte abweicht. Derartige Ausführungen fallen ebenfalls in den Schutzbereich der unabhängigen Hauptansprüche.

Erfindungsgemäß ist eine Gondel für eine Windkraftanlage vorgesehen. Die Gondel umfasst:
- ein Gondelgehäuse;
- eine Rotornabe;
- eine Rotorlagerung zur Lagerung der Rotornabe am Gondelgehäuse.

Die Rotorlagerung umfasst eine Gleitlagerung nach einem der vorhergehenden Ansprüche.

Besonders bei erfindungsgemäßen Gondeln führt die erfindungsgemäße Gleitlagerung zu einer einfachen Wartbarkeit der Gleitlagerung.

Erfindungsgemäß ist darüber hinaus eine Windkraftanlage mit einer Gondel obig beschriebenen Gondel vorgesehen.

Erfindungsgemäß ist ein Verfahren zum Wechsel von Gleitlagerpads in einer obig beschriebenen Gleitlagerung vorgesehen. Das Verfahren weist folgende Verfahrensschritte auf:
- Lösen einer der Befestigungsvorrichtungen durch axiales Verschieben der Profilelemente;
- Axiales Herausziehen der Befestigungsvorrichtung des betreffenden Gleitlagerpads aus dem Zwischenraum zwischen dem inneren Ringelement und dem Gleitlagerpad;
- Entfernen des Gleitlagerpads durch radiales nach innen verschieben des Gleitlagerpads und anschließend axiales Herausziehen des Gleitlagerpads aus dem inneren Ringelement;
- Einsetzen eines neuen Gleitlagerpads durch axiales Einschieben des Gleitlagerpads und anschließend radiales nach außen verschieben des Gleitlagerpads;
- Axiales Hineinschieben der Befestigungsvorrichtung des betreffenden Gleitlagerpads in den Zwischenraum zwischen dem inneren Ringelement und dem Gleitlagerpad, wobei mittels der Befestigungsvorrichtung das Gleitlagerpad mit dem inneren Ringelement gekoppelt wird;
- Fixieren des Gleitlagerpads durch axiales Verschieben der Profilelemente.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: eine perspektivische Ansicht eines Ausführungsbeispiels einer Gleitlagerung;
- Fig. 3: eine perspektivische Schnittdarstellung der Gleitlagerung;
- Fig. 4: eine erste perspektivische Ansicht eines Ausführungsbeispiels eines Gleitlagerpads;
- Fig. 5: eine zweite perspektivische Ansicht des Ausführungsbeispiels des Gleitlagerpads;
- Fig. 6: eine perspektivische Ansicht eines Ausführungsbeispiels eines inneren Ringelementes;
- Fig. 7: eine perspektivische Ansicht des inneren Ringelementes mit daran angeordneten Gleitlagerpads.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

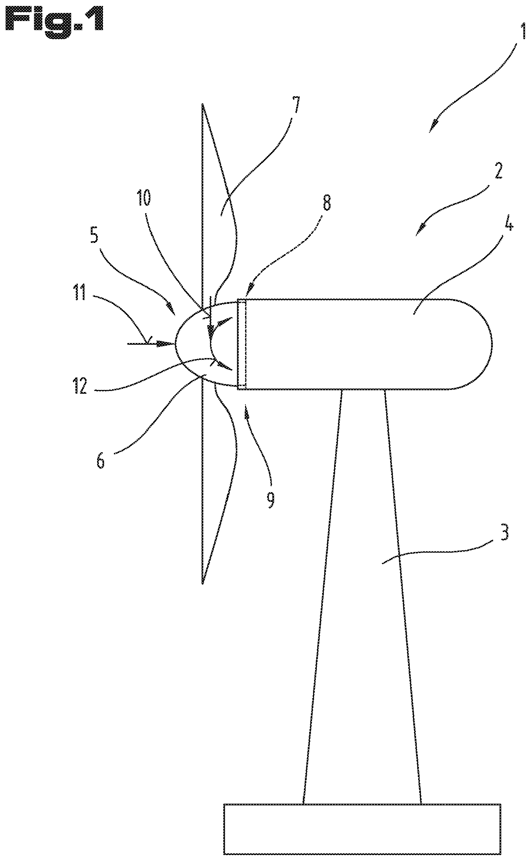

Fig. 1 zeigt in einer schematischen Darstellung ein erstes Ausführungsbeispiel einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen. Insbesondere ist vorgesehen, dass eine erfindungsgemäße und noch näher beschriebene Gleitlagerung 9 als Rotorlagerung 8 eingesetzt wird.

Die Rotorlagerung 8, welche zur Lagerung der Rotornabe 6 am Gondelgehäuse 4 der Gondel 2 dient, ist zur Aufnahme einer Radialkraft 10 und einer Axialkraft 11 ausgebildet. Die Axialkraft 11 ist bedingt durch die Kraft des Windes. Die Radialkraft 10 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 10 ein Kippmoment 12 hervorgerufen. Das Kippmoment 12 kann ebenfalls durch eine ungleichmäßige Belastung der Rotorblätter 7 hervorgerufen werden. Dieses Kippmoment 12 kann mittels einer zweiten Gleitlagerung aufgenommen werden, welche in einem Abstand zur erfindungsgemäßen Gleitlagerung 9 angeordnet ist.

Die erfindungsgemäße Rotorlagerung 8 kann beispielsweise einen Durchmesser zwischen 0,5 m und 5 m aufweisen. Natürlich ist es auch denkbar, dass die Rotorlagerung 8 kleiner oder größer ist.

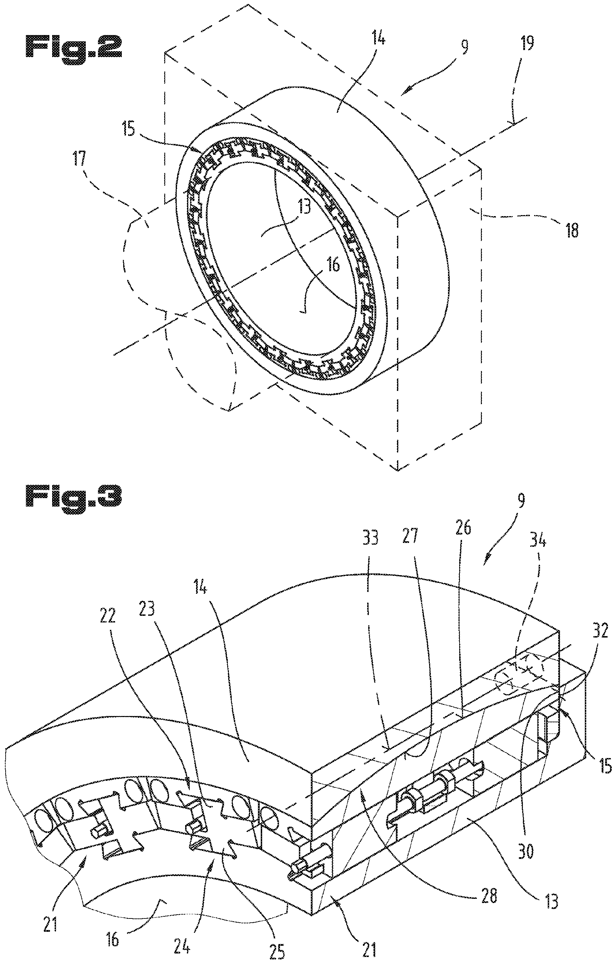

Fig. 2 zeigt ein erstes Ausführungsbeispiel der in der Gondel 2 verbauten Gleitlagerung 9. Die Gleitlagerung 9 ist in Fig. 2 in einer perspektivischen Ansicht dargestellt. Natürlich kann die in Fig. 2 dargestellte Gleitlagerung 9 auch in sämtlichen anderen Industrieanwendungen außerhalb von Windkraftanlagen eingesetzt werden.

Wie aus Fig. 2 ersichtlich, kann vorgesehen sein, dass die Gleitlagerung 9 ein inneres Ringelement 13 und ein äußeres Ringelement 14 aufweist. Zwischen dem inneren Ringelement 13 und dem äußeren Ringelement 14 ist ein Gleitlagerelement 15 angeordnet, welches zur rotatorischen Gleitlagerung des inneren Ringelementes 13 relativ zum äußeren Ringelement 14 dient.

Im Ausführungsbeispiel, welches in Fig. 2 dargestellt ist, ist am inneren Ringelement 13 eine Innenmantelfläche 16 ausgebildet, welche eine zylindrische Form aufweist und zur Aufnahme einer Rotorwelle 17 oder einer sonstigen Welle dient. Die Rotorwelle 17 ist in Fig. 2 schematisch dargestellt. Weiters kann vorgesehen sein, dass das äußere Ringelement 14 mittels einer Lagerhalterung 18 mit dem Gondelgehäuse 4 gekoppelt ist. Bei dem in Fig. 2 dargestellten Ausführungsbeispiel ist somit vorgesehen, dass das äußere Ringelement 14 starr mit dem Gondelgehäuse 4 gekoppelt ist und das innere Ringelement 13 mittels dem Gleitlagerelement 15 relativ zum äußeren Ringelement 14 bezüglich einer Rotorachse 19 verdrehbar ist. Da die Rotorwelle 17, welche mit der Rotornabe 6 und somit mit dem Rotor 5 gekoppelt ist, im inneren Ringelement 13 aufgenommen ist, ist somit die Rotorwelle 17 mittels der Gleitlagerung 9 im Gondelgehäuse 4 drehbar aufgenommen.

In Fig. 3 ist die Gleitlagerung 9 in einer perspektivischen Querschnittdarstellung dargestellt. Wie aus Fig. 3 ersichtlich, umfasst das Gleitlagerelement 15 mehrere einzelne Gleitlagerpads 20, welche über den Umfang verteilt zwischen dem inneren Ringelement 13 und dem äußeren Ringelement 14 angeordnet sind.

Die einzelnen Gleitlagerpads 20 sind jeweils mittels einer Befestigungsvorrichtung 21 mit dem inneren Ringelement 13 gekoppelt. Insbesondere ist vorgesehen, dass die Befestigungsvorrichtung 21 zwischen dem Gleitlagerpad 20 und dem inneren Ringelement 13 angeordnet ist. Die Befestigungsvorrichtung 21 selbst ist am inneren Ringelement 13 angeordnet und dient als Träger für die einzelnen Gleitlagerpads 20.

Das Gleitlagerpad 20 weist ein Befestigungsprofil 22 auf, welches mit einem ersten Profilelement 23 der Befestigungsvorrichtung 21 gekoppelt ist.

Weiters ist im inneren Ringelement 13 ein Aufnahmeprofil 24 ausgebildet, welches mit einem zweiten Profilelement 25 der Befestigungsvorrichtung 21 gekoppelt ist.

Wie besonders gut aus Fig. 3 ersichtlich, ist die Verbindung zwischen dem Befestigungsprofil 22 und dem ersten Profilelement 23 der Befestigungsvorrichtung 21 als Schwalbenschwanzverbindung ausgeführt. Somit kann das erste Profilelement 23 axial in das Befestigungsprofil 22 eingeschoben werden.

Analog dazu sind das Aufnahmeprofil 24 und das zweite Profilelement 25 der Befestigungsvorrichtung 21 ebenfalls als Schwalbenschwanzverbindung ausgeführt. Somit kann das zweite Profilelement 25 axial in das Aufnahmeprofil 24 eingeschoben werden.

Somit sind mittels der Befestigungsvorrichtung 21 die Gleitlagerpads 20 lösbar am inneren Ringelement 13 aufgenommen.

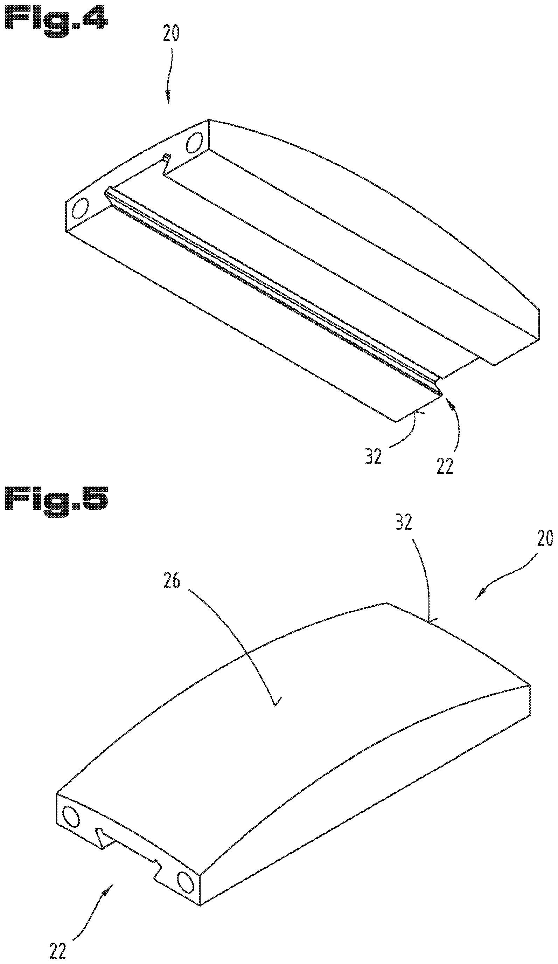

Die einzelnen Gleitlagerpads 20 sind in den Fig. 4 und 5 jeweils in einer perspektivischen Ansicht dargestellt. Der weitere Aufbau des Gleitlagers 9, insbesondere der Gleitlagerpads 20 erfolgt unter einer Zusammenschau der Figuren 3, 4 und 5.

Wie aus den Figuren 3, 4 und 5 ersichtlich, kann vorgesehen sein, dass das Befestigungsprofil 22 bzw. das Aufnahmeprofil 24 als Nut der Schwalbenschwanzverbindung ausgebildet ist. Das erste Profilelement 23 und das zweite Profilelement 25 der Befestigungsvorrichtung 21 können damit korrespondierend als Feder ausgebildet sein.

Alternativ dazu ist es natürlich auch denkbar, dass erste Profilelement 23 und das zweite Profilelement 25 der Befestigungsvorrichtung 21 als Nut ausgebildet sind und das Befestigungsprofil 22 bzw. das Aufnahmeprofil 24 als Feder ausgebildet sind.

Somit können die einzelnen Befestigungsvorrichtungen 21 in Axialrichtung der Rotorachse 19 in das Aufnahmeprofil 24 des inneren Ringelements 13 bzw. in das Befestigungsprofil 22 des Gleitlagerpads 20 eingeschoben werden bzw. aus diesem wieder herausgenommen werden. Dies dient zum einfachen Wechsel bzw. zur einfachen Montage der einzelnen Gleitlagerpads 20. Darüber hinaus kann durch die Schwalbenschwanzverbindung erreicht werden, dass die einzelnen Gleitlagerpads 20 durch die formschlüssig wirkende Schwalbenschwanzverbindung gut mit dem inneren Ringelement 13 verbunden sind.

Die einzelnen Gleitlagerpads 20 sind somit durch den beschriebenen Aufbau im Betriebszustand der Gleitlagerung 9 fest mit dem inneren Ringelement 13 verbunden und drehen sich somit mit diesem relativ zum äußeren Ringelement 14. Um die Drehbewegung zwischen dem inneren Ringelement 13 und dem äußeren Ringelement 14 zu ermöglichen, ist an den einzelnen Gleitlagerpads 20 dem Befestigungsprofil 22 gegenüberliegend jeweils eine Lagerfläche 26 ausgebildet, welche im einsatzbereiten Zustand der Gleitlagerung 9 an einer Gegenfläche 27 des äußeren Ringelementes 14 anliegt. Die Gegenfläche 27 ist an einer Innenseite 28 des äußeren Ringelements 14 angeordnet. Die Lagerfläche 26 des Gleitlagerpads 20 und die Gegenfläche 27 des äußeren Ringelements 14 sind als Gleitflächen ausgebildet, welche im Betrieb der Gleitlagerung 9 aneinander gleiten. Insbesondere kann vorgesehen sein, dass die Gegenfläche 27 des äußeren Ringelementes 14 als harte, verschleißfeste Oberfläche ausgebildet ist, welche beispielsweise durch einen gehärteten Stahl gebildet sein. Die Lagerfläche 26 des Gleitlagerpads 20 kann aus einem im Vergleich zur Gegenfläche 27 weichen Gleitlagerwerkstoff gebildet sein. Natürlich ist es auch denkbar, dass die Lagerfläche 26 eine Gleitbeschichtung aufweist.

Wie besonders gut in Fig. 3 ersichtlich, ist die Lagerfläche 26 in Form einer Kugelkalotte ausgebildet. Die Ausbildung der Lagerfläche 26 bzw. der Gegenfläche 27 in Form einer Kugelkalotte bringt den Vorteil mit sich, dass die Gleitlagerpads 20 einfach um die Rotorachse 19 rotiert werden können. Gleichzeitig können die Gleitlagerpads 20 um einen Winkel bezüglich der Längserstreckung der Rotorachse 19 verkippt werden. Durch die beschriebene Ausführung einer Kugelkalotte können somit Durchbiegungen der Rotorwelle 17 in der Gleitlagerung 9 ausgeglichen werden, ohne dass es dabei zu einer erhöhten Flächenbelastung an der Lagerfläche 26 kommt.

Darüber hinaus können durch die Ausführung der Lagerfläche 26 bzw. der Gegenfläche 27 in Form einer Kugelkalotte neben der Übertragung von Radiallagerkräften auch Axiallagerkräfte übertragen werden.

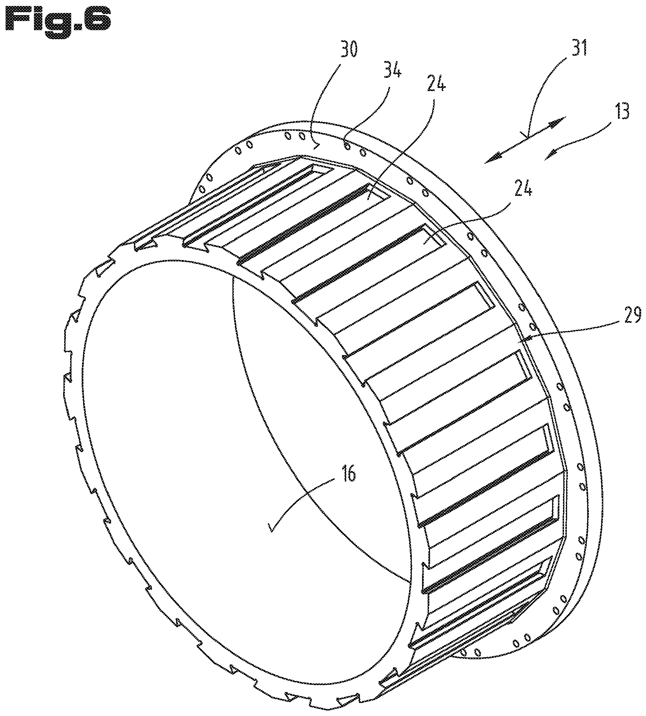

Fig. 6 zeigt eine perspektivische Ansicht des inneren Ringelementes 13. Wie aus einer Zusammenschau der Fig. 3 bis 6 ersichtlich, sind die einzelnen Aufnahmeprofile 24 an einer Außenseite 29 des inneren Ringelementes 13 angeordnet. Insbesondere ist vorgesehen, dass die einzelnen Aufnahmeprofile 24 gleichmäßig über den Umfang verteilt am inneren Ringelement 13 angeordnet sind. Somit dient jedes Aufnahmeprofil 24 zur Aufnahme eines Gleitlagerpads 20.

Wie besonders gut aus Fig. 6 ersichtlich, kann vorgesehen sein, dass an der Außenseite 29 des inneren Ringelementes 13 ein Axialanschlag 30 ausgebildet ist, welcher zum Positionieren des Gleitlagerpads 20 in Axialrichtung 31 dient. Der Axialanschlag 30 kann, wie aus Fig. 6 ersichtlich, als Absatz ausgebildet sein.

Weiters kann vorgesehen sein, dass eine Stirnseite 32 des Gleitlagerpads 20 im verbauten Zustand des Gleitlagerpads 20 am Axialanschlag 30 anliegt. Dadurch kann das Gleitlagerpad 20 axial positioniert werden.

Weiters kann, wie besonders gut in Fig. 3 ersichtlich, vorgesehen sein, dass das Gleitlagerpad 20 mittels eines Befestigungselementes 33, wie etwa einer Schraube, insbesondere einer Dehnschraube in Axialrichtung 31 an den Axialanschlag angedrückt wird. Das Befestigungselement 33 kann in eine Gewindebohrung 34 eingeschraubt sein, welche im Axialanschlag 30 ausgebildet ist.

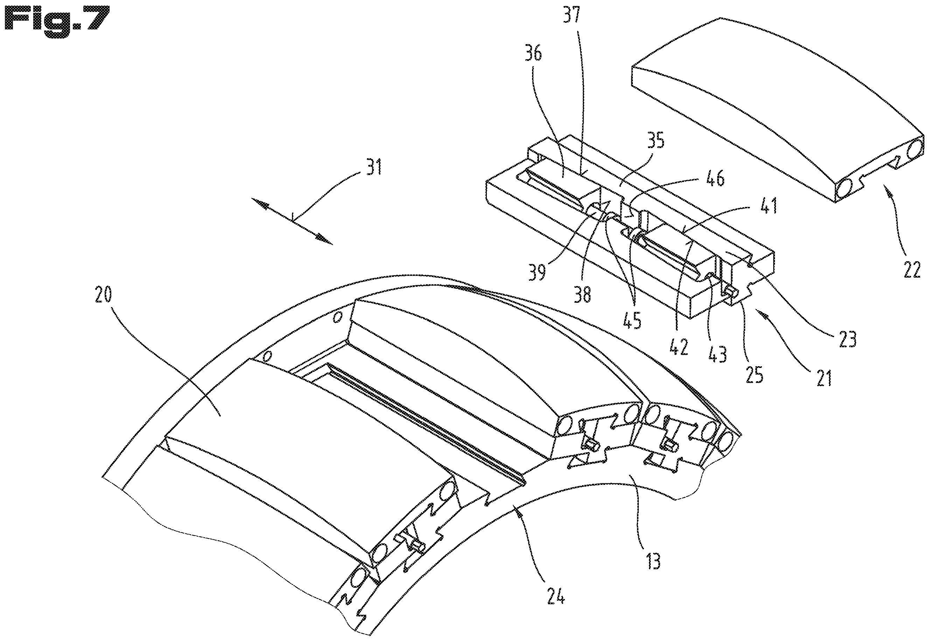

Fig. 7 zeigt eine perspektivische Ansicht des inneren Ringelementes 13 mitsamt den daran angeordneten Gleitlagerpads 20. Zur besseren Darstellung der Funktion der Verbindung zwischen den einzelnen Gleitlagerpads 20 und dem inneren Ringelement 13 ist eines der Gleitlagerpads 20 zur Seite geschoben.

Wie aus Fig. 7 ersichtlich, kann vorgesehen sein, dass die Befestigungsvorrichtung 21 zum Fixieren des Gleitlagerpads 20 im inneren Ringelement 13 dient. Die Befestigungsvorrichtung 21 kann insbesondere zwischen dem Befestigungsprofil 22 des Gleitlagerpads 20 und dem Aufnahmeprofil 24 des inneren Ringelementes 13 wirken bzw. zwischen diesen beiden Elementen angeordnet sein.

Wie aus Fig. 7 weiters ersichtlich, kann vorgesehen sein, dass die Befestigungsvorrichtung 21 zumindest einen ersten Klemmkeil 36 umfasst, welcher eine Keilfläche 37 aufweist. In einem Hauptkörper 35 der Befestigungsvorrichtung 21 ist eine Gegenkeilfläche 38 ausgebildet, welche sich in Axialrichtung 31 verjüngt und welche mit der Keilfläche 37 zusammenwirkt. Weiters ist ein erstes Positioniermittel 39 vorgesehen, mittels welchen der erste Klemmkeil 36 in Axialrichtung 31 verschiebbar ist. Der erste Klemmkeil 36 kann sich in das erste Profilelement 23 und auch in das zweite Profilelement 25 erstrecken. Insbesondere kann die Schwalbenschwanzfeder des ersten Profilelementes 23 durch den Hauptkörper 35 zusammen mit dem ersten Klemmkeil 36 gebildet sein. Analog dazu kann die Schwalbenschwanzfeder des zweiten Profilelementes 25 durch den Hauptkörper 35 zusammen mit dem ersten Klemmkeil 36 gebildet sein.

Durch Verschieben des ersten Klemmkeiles 36 relativ zum Hauptkörper 35 in Axialrichtung 31 kann die Schwalbenschwanzfeder des ersten Profilelementes 23 bzw. die Schwalbenschwanzfeder des zweiten Profilelementes 25 vergrößert bzw. verkleinert werden. Dadurch kann eine Klemmung des ersten Profilelementes 23 im Befestigungsprofil 22 bzw. eine Klemmung des zweiten Profilelementes 25 im Aufnahmeprofil 24 erreicht werden.

Analog dazu kann vorgesehen sein, dass die Befestigungsvorrichtung 21 einen zweiten Klemmkeil 40 umfasst, welcher ebenfalls eine Keilfläche 41 aufweist. Die Keilfläche 41 kann mit einer im Hauptkörper 35 ausgebildeten und sich in Axialrichtung 31 verjüngenden zweiten Gegenkeilfläche 42 zusammenwirken. Die erste Gegenkeilfläche 38 und die zweite Gegenkeilfläche 42 sind entgegengesetzt verjüngend ausgebildet. Der zweite Klemmkeil 40 ist mittels einem zweiten Positioniermittel 43 in Axialrichtung 31 verschiebbar. Insbesondere kann vorgesehen sein, dass das erste Positioniermittel 39 und das zweite Positioniermittel 43 an einer gemeinsamen Positionierstange 44 ausgebildet sind. Weiters kann vorgesehen sein, dass die Positionierstange 44 eine Axialführung 45 aufweist, welche in einer Positionierstangenaufnahme 46 aufgenommen ist. Die Positionierstangenaufnahme 46 kann im Hauptkörper 35 ausgebildet sein. Die Axialführung 45 kann beispielsweise als Tonne ausgebildet sein.

Insbesondere kann vorgesehen sein, dass das erste Positioniermittel 39 ein Linksgewinde aufweist und das zweite Positioniermittel 43 ein Rechtsgewinde aufweist, sodass beim Verdrehen der Positionierstange 44 in eine erste Richtung die beiden Klemmkeile 36, 40 voneinander entfernt werden und beim Drehen der Positionierstange 44 in einer zweiten Drehrichtung die beiden Klemmkeile 36, 40 aufeinander zubewegt werden. Somit kann durch Verdrehen der Positionierstange 44 die Klemmung geöffnet bzw. geschlossen werden. Natürlich können das Linksgewinde und das Rechtsgewinde auch vertauscht sein.

Wie aus obiger Beschreibung ersichtlich, weist der zweite Klemmkeil 40 somit eine analoge Funktion zum ersten Klemmkeil 36 auf und bildet ebenfalls zusammen mit dem Hauptkörper 35 die Schwalbenschwanzfeder des ersten Profilelementes 23 bzw. die Schwalbenschwanzfeder des zweiten Profilelementes 25.

Anhand der Fig. 3 und 7 wird ein Zusammenbau der Gleitlagerung 9 beschrieben.

In einem ersten Verfahrensschritt wird das äußere Ringelement 14 an seinem Aufstellungsort, beispielsweise im Gondelgehäuse 4, fixiert. Anschließend wird eine Welle, beispielsweise die Rotorwelle 17, mit dem darauf angeordneten inneren Ringelement 13 in Axialrichtung in das äußere Ringelement 14 eingeschoben, wobei bei diesem Vorgang die einzelnen Gleitlagerpads 20 noch nicht am inneren Ringelement 13 angeordnet sind.

Anschließend wird das innere Ringelement 13 in Axialposition und auch in Radialposition relativ zum äußeren Ringelement 14 koaxial ausgerichtet.

Anschließend kann das Gleitlagerpad 20 in Axialrichtung 31 zwischen das innere Ringelement 13 und das äußere Ringelement 14 eingeschoben werden. Anschließend wird das Gleitlagerpad 20 in Radialrichtung nach außen verschoben, sodass die Lagerfläche 26 des Gleitlagerpads 20 an der Gegenfläche 27 anliegt. Das Gleitlagerpad 20 ist hierbei vom inneren Ringelement 13 beabstandet, wodurch sich ein Freiraum ergibt.

In einem anschließenden Verfahrensschritt wird die Befestigungsvorrichtung 21 in Axialrichtung 31 in den Freiraum zwischen dem Gleitlagerpad 20 und dem inneren Ringelement 14 eingeschoben. Hierbei wird das erste Profilelement 23 der Befestigungsvorrichtung 21 in das Befestigungsprofil 22 des Gleitlagerpads 20 eingeschoben und gleichzeitig das zweite Profilelement 25 der Befestigungsvorrichtung 21 in das Aufnahmeprofil 24 des inneren Ringelementes 13 eingeschoben.

Beim Positionieren der Befestigungsvorrichtung 21 im Befestigungsprofil 22 bzw. im Aufnahmeprofil 24, werden der erste Klemmkeil 36 und der zweite Klemmkeil 40 in der Befestigungsvorrichtung 21 so weit voneinander beabstandet angeordnet, dass das erste Profilelement 23 der Befestigungsvorrichtung 21 leichtgängig in das Befestigungsprofil 22 des Gleitlagerpads 20 eingeschoben und das zweite Profilelement 25 der Befestigungsvorrichtung 21 leichtgängig in das Aufnahmeprofil 24 des inneren Ringelementes 13 eingeschoben werden kann.

Das Gleitlagerpad 20 und auch die Befestigungsvorrichtung 21 werden in Axialrichtung 31 so weit auf das innere Ringelement 13 aufgeschoben, bis diese am Axialanschlag 30 anliegen und somit in Axialrichtung 31 positioniert sind. Dadurch ist die Axialposition des Gleitlagerpads 20 definiert.

Anschließend kann das Befestigungselement 33 in die Gewindebohrung 34 eingeschraubt werden, um das Gleitlagerpad 20 in seiner axialen Position zu sichern.

Anschließend kann die Positionierstange 31 in Zudrehrichtung gedreht werden, sodass die beiden Klemmkeile 36, 40 aufeinander zugezogen werden. Durch diese Bewegung der beiden Klemmkeile 36, 40 respektive durch die Keilflächen 37, 41 wird mittels der Klemmkeile 36, 40 das erste Profilelement 23 im Befestigungsprofil 22 der Gleitlagerpads 20 und das zweite Profilelement 25 im Aufnahmeprofil 24 geklemmt. Somit wird mittels der Befestigungsvorrichtung 21 das Gleitlagerpad 20 am inneren Ringelement 13 fixiert.

Optional kann nun das Befestigungselement 33 noch nachgezogen werden.

Alternativ kann natürlich auch zuerst die Befestigungsvorrichtung 21 appliziert werden und erst anschließend das Befestigungselement 33 appliziert werden.

Anschließend wird das innere Ringelement 13 mitsamt der Welle um einen Winkel verdreht, sodass das nächste Gleitlagerpad 20 in der obig beschriebenen Weise mit dem inneren Ringelement 13 gekoppelt werden kann. Die obig beschriebenen Vorgänge werden wiederholt, bis in allen Aufnahmeprofilen 24 des inneren Ringelements 13 ein Gleitlagerpad 20 aufgenommen ist.

Nach dem Fertigstellen der Montage kann eine für die Montage notwendige Halterung bzw. Lagerung der Welle entfernt werden, sodass die Welle mittels der Gleitlagerung 9 in der Lagerhalterung 18 gelagert ist und somit betriebsbereit ist.

Zum Austausch der einzelnen Gleitlagerpads 20 ist es nicht notwendig, dass die Last der Welle von einer externen Lagerung aufgenommen wird, sondern kann vorgesehen sein, dass immer nur ein einzelnes Gleitlagerpad 20 gegen ein neues Gleitlagerpad 20 ersetzt wird, wobei dieser Vorgang wiederholt wird, bis alle Gleitlagerpads 20 ausgetauscht sind. Hierbei kann die Befestigungsvorrichtung 21 gelöst werden und nach dem Entfernen der Befestigungsvorrichtung 21 das freie Gleitlagerpad 20 in Axialrichtung 31 aus dem inneren Ringelement 13 herausgezogen werden.

Anschließend kann ein neues Gleitlagerpad 20 entsprechend der obigen Beschreibung in die Position des alten Gleitlagerpads 20 eingesetzt werden. Anschließend kann das neu eingesetzte Gleitlagerpad 20 fixiert werden und anschließend das innere Ringelement 13 verdreht werden, sodass das nächste Gleitlagerpad entsprechend den obig beschriebenen Schritten ausgetauscht werden kann. Dieser Vorgang kann wiederholt werden, bis alle Gleitlagerpads 20 ausgetauscht sind.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Windkraftanlage | 30 | Axialanschlag |
| 2 | Gondel | 31 | Axialrichtung |
| 3 | Turm | 32 | Stirnseite Gleitlagerpad |
| 4 | Gondelgehäuse | 33 | Befestigungselement |
| 5 | Rotor | 34 | Gewindebohrung |
| 6 | Rotornabe | 35 | Hauptkörper |
| 7 | Rotorblatt | 36 | erster Klemmkeil |
| 8 | Rotorlagerung | 37 | Keilfläche erster Klemmkeil |
| 9 | Gleitlagerung | 38 | erste Gegenkeilfläche |
| 10 | Radialkraft | 39 | erstes Positioniermittel |
| 11 | Axialkraft | 40 | zweiter Klemmkeil |
| 12 | Kippmoment | 41 | Keilfläche zweiter Klemmkeil |
| 13 | inneres Ringelement | 42 | zweite Gegenkeilfläche |
| 14 | äußeres Ringelement | 43 | zweites Positioniermittel |
| 15 | Gleitlagerelement | 44 | Positionierstange |
| 16 | Innenmantelfläche inneres Ringelement | 45 | Axialführung |
| | | 46 | Positionierstangenaufnahme |
| 17 | Rotorwelle | | |
| 18 | Lagerhalterung | | |
| 19 | Rotorachse | | |
| 20 | Gleitlagerpad | | |
| 21 | Befestigungsvorrichtung | | |
| 22 | Befestigungsprofil | | |
| 23 | erstes Profilelement | | |
| 24 | Aufnahmeprofil | | |
| 25 | zweites Profilelement | | |
| 26 | Lagerfläche | | |
| 27 | Gegenfläche | | |
| 28 | Innenseite | | |
| 29 | Außenseite | | |

## Patentansprüche

1. Gondel (2) für eine Windkraftanlage (1), die Gondel (2) umfassend:
- ein Gondelgehäuse (4);
- eine Rotornabe (6);
- eine Rotorlagerung (8) zur Lagerung der Rotornabe (6) am Gondelgehäuse (4), wobei die Rotorlagerung (8) eine Gleitlagerung (9) aufweist, die Gleitlagerung (9) umfassend:
- ein inneres Ringelement (13);
- ein äußeres Ringelement (14);
- zumindest ein Gleitlagerelement (15), welches zwischen dem inneren Ringelement (13) und dem äußeren Ringelement (14) angeordnet ist,
wobei das Gleitlagerelement (15) mehrere Gleitlagerpads (20) aufweist,
**dadurch gekennzeichnet, dass** die einzelnen Gleitlagerpads (20) jeweils eine Lagerfläche (26) aufweisen, welche in Form einer Kugelkalotte ausgebildet ist.

2. Gondel (2) nach Anspruch 1, **dadurch gekennzeichnet, dass** die einzelnen Gleitlagerpads (20) jeweils ein der Lagerfläche (26) gegenüberliegendes Befestigungsprofil (22) aufweisen, und dass das innere Ringelement (13) an dessen radialer Außenseite (29) zumindest ein Aufnahmeprofil (24) aufweist, welches zur formschlüssigen Verbindung der Gleitlagerpads (20) mit dem inneren Ringelement (13) dient.

3. Gondel (2) nach Anspruch 2, **dadurch gekennzeichnet, dass** eine Befestigungsvorrichtung (21) ausgebildet ist, welche zwischen dem Gleitlagerpad (20) und dem inneren Ringelement (13) angeordnet ist, wobei die Befestigungsvorrichtung (21) mit dem Befestigungsprofil (22) und dem Aufnahmeprofil (24) gekoppelt ist.

4. Gondel (2) nach Anspruch 3, **dadurch gekennzeichnet, dass** die Befestigungsvorrichtung (21) ein erstes Profilelement (23) aufweist, welches mit dem Befestigungsprofil (22) gekoppelt ist und an der gegenüberliegenden Seite ein zweites Profilelement (25) aufweist, welches mit dem Aufnahmeprofil (24) gekoppelt ist.

5. Gondel (2) nach Anspruch 3 oder 4, **dadurch gekennzeichnet, dass** das Befestigungsprofil (22) und das erste Profilelement (23) als Schwalbenschwanzverbindung ausgebildet ist und/oder dass das Aufnahmeprofil (24) und das zweite Profilelement (25) als Schwalbenschwanzverbindung ausgebildet ist.

6. Gondel (2) nach einem der Ansprüche 3 bis 5, **dadurch gekennzeichnet, dass** die Befestigungsvorrichtung (21) einen Hauptkörper (35) und zumindest einen ersten Klemmkeil (36) umfasst, welcher eine Keilfläche (37) aufweist, die mit einer im Hauptkörper (35) ausgebildeten und sich in Axialrichtung (31) verjüngenden ersten Gegenkeilfläche (38) zusammenwirkt, wobei der erste Klemmkeil (36) mittels einem ersten Positioniermittel (39), insbesondere einem Gewindeelement, in Axialrichtung (31) relativ zum Hauptkörper (35) verschiebbar ist.

7. Gondel (2) nach Anspruch 6, **dadurch gekennzeichnet, dass** die Befestigungsvorrichtung (21) einen zweiten Klemmkeil (40) umfasst, welcher eine Keilfläche (41) aufweist, die mit einer im Hauptkörper (35) ausgebildeten und sich in Axialrichtung (31) verjüngenden zweiten Gegenkeilfläche (42) zusammenwirkt, wobei die erste Gegenkeilfläche (38) und die zweite Gegenkeilfläche (42) entgegengesetzt verjüngend ausgebildet sind, wobei der zweite Klemmkeil (40) mittels einem zweiten Positioniermittel (43), insbesondere einem Gewindeelement, in Axialrichtung (31) verschiebbar ist.

8. Gondel (2) nach Anspruch 7, **dadurch gekennzeichnet, dass** das erste Positioniermittel (39) und das zweite Positioniermittel (43) an einer gemeinsamen Positionierstange (44) ausgebildet sind, wobei das erste Positioniermittel (39) ein Rechtsgewinde und das zweite Positioniermittel (43) ein Linksgewinde aufweist.

9. Gondel (2) nach einem der Ansprüche 6 bis 9, **dadurch gekennzeichnet, dass** der erste Klemmkeil (36) und/oder der zweite Klemmkeil (40) derart ausgebildet ist, dass er sich in das Befestigungsprofil (22) und in das Aufnahmeprofil (24) erstreckt.

10. Gondel (2) nach einem der vorhergehenden Ansprüche, **dadurch gekennzeichnet, dass** am inneren Ringelement (13) im Bereich des Aufnahmeprofils (24) ein Axialanschlag (30) für das Gleitlagerpad (20) ausgebildet ist.

11. Gondel (2) nach Anspruch 10, **dadurch gekennzeichnet, dass** ein Befestigungselement (33) vorgesehen ist, mittels welchem das Gleitlagerpad (20) in Axialrichtung an den Axialanschlag (30) angedrückt ist.

12. Windkraftanlage (1) mit einer Gondel (2) nach einem der Ansprüche 1 bis 11.

13. Verfahren zum Wechsel von Gleitlagerpads (20) in einer Gondel (2) nach einem der Ansprüche 1 bis 11, **gekennzeichnet durch** die Verfahrensschritte:
- Lösen einer der Befestigungsvorrichtungen (21) durch axiales Verschieben der Profilelemente (23, 25);
- Axiales Herausziehen der Befestigungsvorrichtung (21) des betreffenden Gleitlagerpads (20) aus dem Zwischenraum zwischen dem inneren Ringelement (13) und dem Gleitlagerpad (20);
- Entfernen des Gleitlagerpads (20) durch radiales nach innen verschieben des Gleitlagerpads (20) und anschließend axiales Herausziehen des Gleitlagerpads (20) aus dem inneren Ringelement (13);
- Einsetzen eines neuen Gleitlagerpads (20) durch axiales Einschieben des Gleitlagerpads (20) und anschließend radiales nach außen verschieben des Gleitlagerpads (20);
- Axiales Hineinschieben der Befestigungsvorrichtung (21) des betreffenden Gleitlagerpads (20) in den Zwischenraum zwischen dem inneren Ringelement (13) und dem Gleitlagerpad (20), wobei mittels der Befestigungsvorrichtung (21) das Gleitlagerpad (20) mit dem inneren Ringelement (13) gekoppelt wird;
- Fixieren des Gleitlagerpads (20) durch axiales Verschieben der Profilelemente (23, 25).

## Claims

1. A nacelle (2) for a wind turbine (1), the nacelle (2) comprising:
- a nacelle housing (4);
- a rotor hub (6);
- a rotor bearing (8) for bearing the rotor hub (6) on the nacelle housing (4), wherein the rotor bearing (8) comprises a sliding bearing (9), the sliding bearing (9) comprising:
- an inner ring element (13);
- an outer ring element (14);
- at least one sliding bearing element (15), which is arranged between the inner ring element (13) and the outer ring element (14),
wherein
the sliding bearing element (15) has multiple sliding bearing pads (20),
**characterized in that** the individual sliding bearing pads (20) each have a bearing surface (26), which is configured in the shape of a spherical cap.

2. The nacelle (2) according to claim 1, **characterized in that** the individual sliding bearing pads (20) each have a fastening profile (22) opposite the bearing surface (26), and that the inner ring element (13) has at least one receiving profile (24) on its radial outside (29), which receiving profile (24) serves for a positive locking connection between the sliding bearing pads (20) and the inner ring element (13).

3. The nacelle (2) according to claim 2, **characterized in that** a fastening device (21) is formed, which is arranged between the sliding bearing pad (20) and the inner ring element (13), wherein the fastening device (21) is coupled to the fastening profile (22) and the receiving profile (24).

4. The nacelle (2) according to claim 3, **characterized in that** the fastening device (21) has a first profile element (23), which is coupled to the fastening profile (22), and has a second profile element (25) on the opposite side, which is coupled to the receiving profile (24).

5. The nacelle (2) according to claim 3 or 4, **characterized in that** the fastening profile (22) and the first profile element (23) are formed as a dovetail connection and/or that the receiving profile (24) and the second profile element (25) are formed as a dovetail connection.

6. The nacelle (2) according to one of claims 3 to 5, **characterized in that** the fastening device (21) comprises a main body (35) and at least a first clamping wedge (36), which has a wedge surface (37), which cooperates with a first counter wedge surface (38) formed in the main body (35) and tapering in the axial direction (31), wherein the first clamping wedge (36) can be displaced in the axial direction (31) relative to the main body (35) by means of a first positioning means (39), in particular a thread element.

7. The nacelle (2) according to claim 6, **characterized in that** the fastening device (21) comprises a second clamping wedge (40), which has a wedge surface (41), which cooperates with a second counter wedge surface (42) formed in the main body (35) and tapering in the axial direction (31), wherein the first counter wedge surface (38) and the second counter wedge surface (42) are formed to taper in opposite directions, wherein the second clamping wedge (40) can be displaced in the axial direction (31) by means of a second positioning means (43), in particular a thread element.

8. The nacelle (2) according to claim 7, **characterized in that** the first positioning means (39) and the second positioning means (43) are formed on a common positioning rod (44), wherein the first positioning means (39) has a right-handed thread and the second positioning means (43) has a left-handed thread.

9. The nacelle (2) according to one of claims 6 to 9, **characterized in that** the first clamping wedge (36) and/or the second clamping wedge (40) is formed such that it extends into the fastening profile (22) and into the receiving profile (24).

10. The nacelle (2) according to one of the preceding claims, **characterized in that** an axial stop (30) for the sliding bearing pad (20) is formed on the inner ring element (13) in the region of the receiving profile (24).

11. The nacelle (2) according to claim 10, **characterized in that** a fastening element (33) is provided, by means of which the sliding bearing pad (20) is pressed against the axial stop (30) in the axial direction.

12. A wind turbine (1) with a nacelle (2) according to one of claims 1 to 11.

13. A method for replacing sliding bearing pads (20) in a nacelle (2) according to one of claims 1 to 11, **characterized by** the method steps:
- releasing one of the fastening devices (21) by axially displacing the profile elements (23, 25);
- pulling the fastening device (21) of the relevant sliding bearing pad (20) axially out of the intermediate space between the inner ring element (13) and the sliding bearing pad (20);
- removing the sliding bearing pad (20) by radially displacing the sliding bearing pad (20) inwards and subsequently pulling the sliding bearing pad (20) axially out of the inner ring element (13);
- inserting a new sliding bearing pad (20) by axially pushing in the sliding bearing pad (20) and subsequently displacing the sliding bearing pad (20) radially outwards;
- pushing the fastening device (21) of the relevant sliding bearing pad (20) axially into the intermediate space between the inner ring element (13) and the sliding bearing pad (20), wherein the sliding bearing pad (20) is coupled to the inner ring element (13) by means of the fastening device (21);
- fixing the sliding bearing pad (20) by axially displacing the profile elements (23, 25).

## Revendications

1. Nacelle (2) pour une éolienne (1), cette nacelle (2) comprenant :
- un boîtier de nacelle (4) ;
- un moyeu de rotor (6) ;
- un palier de rotor (8) pour le logement du moyeu de rotor (6) au niveau du boîtier de nacelle (4), dans lequel le palier de rotor (8) comprend un palier lisse (9), ce palier lisse (9) comprenant :
- un élément annulaire interne (13) ;
- un élément annulaire externe (14) ;
- au moins un élément de palier plisse (15) qui est disposé entre l'élément annulaire interne (13) et l'élément annulaire externe (14),
dans lequel l'élément de palier lisse (15) comprend plusieurs patins de palier lisse (20), **caractérisée en ce que** les différents patins de palier lisse (20) présentent chacun une surface de palier (26) qui présente la forme d'une calotte sphérique.

2. Nacelle (2) selon la revendication 1, **caractérisée en ce que** les différents patins de palier lisse (20) comprennent chacun un profilé de fixation (22) opposé à la surface de palier (26) et **en ce que** l'élément annulaire interne (13) comprend, sur sa face externe radiale (29), au moins un profilé de logement (24) qui permet une liaison par complémentarité de forme des patins de palier lisse (20) avec l'élément annulaire interne (13).

3. Nacelle (2) selon la revendication 2, **caractérisée en ce qu'**un dispositif de fixation (21) est prévu, qui est disposé entre le patin de palier lisse (20) et l'élément annulaire interne (13), dans laquelle le dispositif de fixation (21) est couplé avec le profilé de fixation (22) et le profilé de logement (24).

4. Nacelle (2) selon la revendication 3, **caractérisée en ce que** le dispositif de fixation (21) comprend un premier élément profilé (23) qui est couplé avec le profilé de fixation (22) et comprend, au niveau de la face opposée, un deuxième élément profilé (25) qui est couplé avec le profilé de logement (24).

5. Nacelle (2) selon la revendication 3 ou 4, **caractérisée en ce que** le profilé de fixation (22) et le premier élément profilé (23) présentent la forme d'une liaison à queue d'aronde et/ou **en ce que** le profilé de logement (24) et le deuxième élément profilé (25) présentent la forme d'une liaison à queue d'aronde.

6. Nacelle (2) selon l'une des revendications 3 à 5, **caractérisée en ce que** le dispositif de fixation (21) comprend un corps principal (35) et au moins une première cale de serrage (36) qui présente au moins une première surface de calage (37) qui interagit avec une première surface de contre-calage (38) réalisée dans le corps principal (35) et se rétrécissant dans la direction axiale (31), dans laquelle la première cale de serrage (36) peut être coulissée, au moyen d'un premier moyen de positionnement (39), plus particulièrement un élément fileté, dans la direction axiale (31), par rapport au corps principal (35).

7. Nacelle (2) selon la revendication 6, **caractérisée en ce que** le dispositif de fixation (21) comprend une deuxième cale de serrage (40), qui comprend une surface de calage (41), qui interagit avec une deuxième surface de contre-calage (42) réalisée dans le corps principal (35) et se rétrécissant dans la direction axiale (31), dans laquelle la première surface de contre-calage (38) et la deuxième surface de contre-calage (42) sont réalisées de façon à se rétrécir dans la direction opposée, dans laquelle la deuxième partie de serrage (40) peut être coulissée, au moyen d'un deuxième moyen de positionnement (43), plus particulièrement un élément fileté, dans la direction axiale (31).

8. Nacelle (2) selon la revendication 7, **caractérisée en ce que** le premier moyen de positionnement (39) et le deuxième moyen de positionnement (43) sont réalisés sur une tige de positionnement (44) commune, dans laquelle le premier moyen de positionnement (39) présente un filetage à droite et le deuxième moyen de positionnement (43) comprend un filetage à gauche.

9. Nacelle (2) selon l'une des revendications 6 à 9, **caractérisée en ce que** la première cale de serrage (36) et/ou la deuxième cale de serrage (40) sont conçues de façon à ce qu'elle s'étende dans le profilé de fixation (22) et dans le profilé de logement (24).

10. Nacelle (2) selon l'une des revendications précédentes, **caractérisée en ce que**, dans l'élément annulaire interne (13), au niveau du profilé de logement (24), est disposée une butée axiale (30) pour le patin de palier lisse (20).

11. Nacelle (2) selon la revendication 10, **caractérisée en ce qu'**un élément de fixation (33) est prévu, au moyen duquel la patin de palier lisse (20) est comprimé dans la direction axiale contre la butée axiale (30).

12. Éolienne (1) avec une nacelle (2) selon l'une des revendications 1 à 11.

13. Procédé de changement des patins de palier lisse (20) dans une nacelle (2) selon l'une des revendications 1 à 11, **caractérisé par** les étapes suivantes :
- détachement d'un des dispositifs de fixation (21) par le coulissement axiale des éléments profilés (23, 25) ;
- extraction axiale du dispositif de fixation (21) du patin de palier lisse (20) concerné hors de l'espace intermédiaire entre l'élément annulaire interne (13) et le patin de palier lisse (20) ;
- retrait du patin de palier lisse (20) par le coulissement radial vers l'intérieur du patin de palier lisse (20) puis extraction axiale du patin de palier lisse (20) hors de l'élément annulaire interne (13) ;
- insertion d'un nouveau patin de palier lisse (20) par coulissement axial du patin de palier lisse (20) puis coulissement radial vers l'extérieur du patin de palier lisse (20) ;
- insertion axiale du dispositif de fixation (21) du patin de palier lisse (20) concerné dans l'espace intermédiaire entre l'élément annulaire interne (13) et le patin de palier lisse (20), dans lequel, au moyen du dispositif de fixation (21), le patin de palier lisse (20), est couplé avec l'élément annulaire interne (13) ;
- fixation du patin de palier lisse (20) par coulissement axial des éléments profilés (23, 25).
